# EUROPEAN PATENT SPECIFICATION

(11) **EP 0 635 044 B1**
(45) Date of publication and mention of the grant of the patent: **07.02.1996**
(21) Application number: 93909087.4
(22) Date of filing: 05.04.1993
(51) Int. Cl.: C09C 1/48, C01B 3/24

(54) **SYSTEM FOR THE PRODUCTION OF CARBON BLACK**
ANLAGE ZUR HERSTELLUNG VON RUSS
SYSTEME DE PRODUCTION DE NOIR DE CARBONE

(30) Priority: 07.04.1992 NO 921359
(43) Date of publication of application: 25.01.1995
(73) Proprietor: KVAERNER ENGINEERING A/S, N-1324 Lysaker (NO)
(72) Inventor: LYNUM, Steinar, N-0284 Oslo (NO); HOX, Ketil, N-7021 Trondheim (NO); HAUGSTEN, Kjell, E., N-0370 Oslo (NO); LANG Y, Jostein, N-3430 Spikkestad (NO)
(74) Representative: Baverstock, Michael George Douglas
(86) International application number: NO9300057
(87) International publication number: WO9320153

(56) References cited:
- EP-A- 0 315 442
- EP-A- 0 392 121
- GB-A- 1 150 362
- GB-A- 1 492 346
- US-A- 4 213 939

## Description

The invention relates to an apparatus for the production of carbon black and hydrogen by the decomposition of hydrocarbons.

From EP 0 315 442, EP 0 392 121, US 4 213 939 and GB 1 150 362 are known methods and systems for the production of carbon black by the incomplete combustion of a hydrocarbon in a gaseous form and/or a liquid form attended by the decomposition of a portion of the hydrocarbon by cracking. However, the main component of the gaseous byproducts are carbon oxides.

From GB 1 492 346 is known a pyrolytic process for the production of carbon black by the thermal decomposition of hydrocarbons in a reaction chamber. However, water vapour is introduced into the plasma stream of the gaseous heat carrier and the hydrocarbons are decomposed into carbon and gaseous byproducts of which hydrogen is only one component.

A number of different systems and processes for the production of carbon black from hydrocarbon gases are known in the prior art. One group of these processes utilizes thermal decomposition of hydrocarbons into a carbon black and a hydrogen component by the use of a plasma torch. However, the methods used until now have usually only resulted in other gaseous hydrocarbon products, e.g. acetylene. Until now no system has been developed which has enabled a continuous production of carbon black and hydrogen to take place, since the earlier systems have had to be stopped after short operational periods due to the formation of deposits, so that the torches and reactors have had to be cleaned before the system could be put into operation again. These disadvantages have resulted in the systems being very expensive to operate with correspondingly high costs for the final products.

A futher disadvantage with the known systems has been that they did not allow full control to be obtained of the final products, i.e. carbon black and hydrogen which were produced, since it has only been possible to produce a standard quality of carbon black with regard to physical properties, with the result that further processing of this product has had to be based on the carbon black obtained. The hydrogen has mainly been burned off.

The object of the present invention is to provide an apparatus for the production of carbon black and hydrogen by decomposition of hydrocarbon gas, which can be operated in a continuous process and where it is possible to preset the process conditions in such a way that a carbon black can be produced with predetermined physical properties. This object is achieved with an apparatus which is characterized by the features in the patent claims presented.

With the apparatus according to the invention a rational and continuous production of carbon black for further processing is made possible, wherein the carbon black is produced with a desired particle size and structure, in such a manner that the carbon black is accurately adapted to suit a subsequent application. Furthermore, a very rational and economical operation is achieved, as portions of the produced hydrogen are returned to the plasma torch and used there as plasma gas. Moreover, hydrogen is used in the plasma torch together with the hydrocarbons in the feed gas, thus reducing the electrode consumption and thereby resulting in a further saving. In the apparatus unwanted particle sizes and coarse fractions are filtered out, thus obtaining a uniform, defined final product. This is in addition to the fact that a reactor is used in which, by means of admixtures and adjustment of the heat zone, it is ensured that the carbon black produced has the desired structure. By means of the cycle used in the system and the return of hydrogen together with the use of natural gas or methane as the starting material, a highly pollution-free decomposition of the hydrocarbons is achieved, so that blockages and fouling in the reactor system are avoided and a continuous process thereby is achieved.

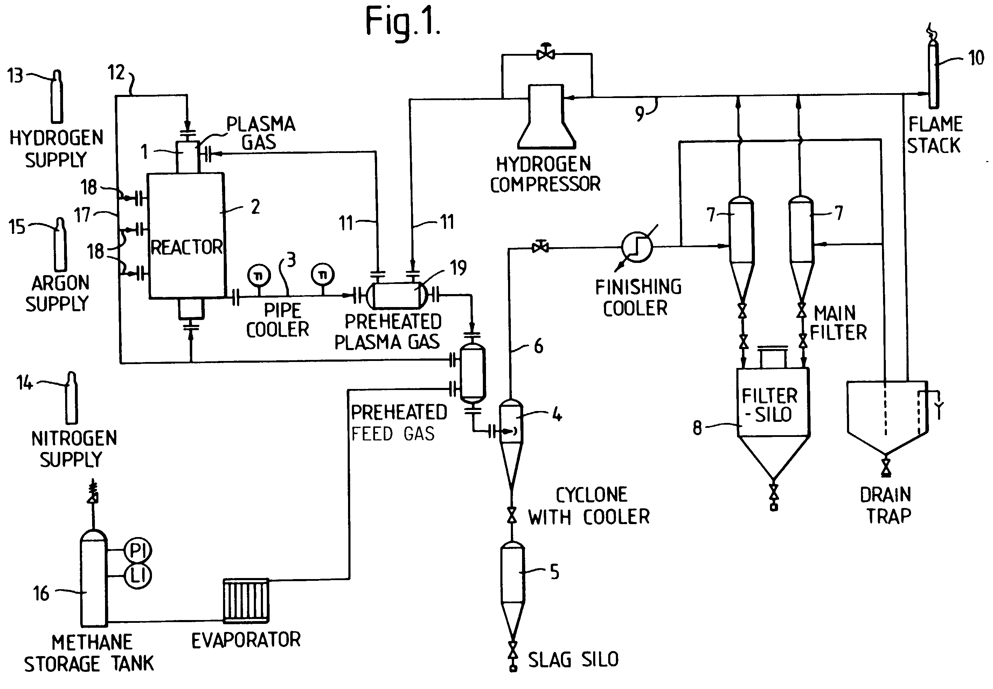

The invention will now be described in more detail by means of an embodiment, which is illustrated purely schematically in the drawing, which shows a simplified process diagram for a system according to the invention.

The apparatus which is outlined in the attached drawing illustrates the principal features which are of importance for the present invention, all other pipelines and piping normally used and which would be present in a system of this kind having been omitted for reasons of clarity. Thus the drawing shows only those principles which are utilized in the invention.

The main section of the apparatus comprises a plasma torch 1 with an attached reactor chamber 2. The plasma torch is supplied with plasma gas which may be hydrogen through a pipe 11 and hydrocarbon gas, e.g. methane, from a storage tank 16 or directly from a gas pipeline through a pipe 17. As safety equipment pipes from, e.g. an argon supply 15 and a nitrogen supply 14 can be connected to the pipe 17, these branch pipes are usually closed by means of valves.

In the plasma torch 1 the hydrocarbon gas is decomposed, in the example methane is decomposed into carbon black and hydrogen, which are further processed in the reactor 2 in order to obtain the desired physical properties for the resulting carbon black. This is done by controlling the temperature of zones in the reactor and a controlled supply of methane resp. admixtures through branch pipes which lead into the reactor chamber and which are schematically indicated by 18. The reactor design is described in more detail in the applicant's copending patent Norwegian application No. 92 1360 and PCT/NO92/00196. The produced carbon black is passed from the reactor together with the hydrogen, the carbon black now having predetermined physical properties, through a pipe cooler 3 and on to separation equipment which, e.g., may consist of a cyclone arrangement 4, 5, where coarse particles are separated if these are not wanted for the further processing. In the cooling system the temperature is reduced from an exit temperature from the reactor which can be between, e.g. 800 and 1600° C, to a temperature of, e.g. 50-160° C. The heat which is removed from the product stream can be heat exchanged at 19 with the feed gas and plasma gas for energy optimization. The exit temperature from the plasma torch in the reactor is of the order of 3000-8000° C.

After separation of coarse particles in the cooling cyclone 4 the coarse particles are collected in a slag silo 5 from which they can later be removed and used for less critical purposes than the specially produced carbon black. The hydrogen and carbon black are passed on through the pipe 6 to a main filter 7 which filters off additional components, so that in the filter silo 8 there is collected only carbon black with a particle size within a desired, defined range and with a special structure which is achieved in the reactor section. The special carbon black can then be removed from the filter silo 8 for further processing. Remaining hydrogen can be recovered from the filters and combined with the hydrogen from the pipe. The hydrogen can either be supplied directly to a chemical processing industry or stored for later use, it can be used as an energy carrier and employed, e.g., in power production, and a desired portion is returned through the pipe 11 to the plasma torch and used as plasma gas there.

For reasons of safety the apparatus is connected to a flame stack 10 where the gas can be burned off. Thus one of the final products of the process which is carried out in the apparatus is used as an operating means for the actual process. This offers the benefit of reduced energy consumption, while at the same time a completely pure gas without pollution is used as plasma gas, thus resulting in minimum contamination of the torch. In the starting up period it may be necessary to supply extra hydrogen from a supply 13. In controlling the hydrogen gas feed to the torch it is possible to control the operation of the reactor and the torch in such a way that the system thereby achieves some degree of self-monitoring. During normal operation the apparatus will be completely self-sufficient in plasma gas.

In the above description of the apparatus only the main components are described and it should be quite obvious that many modifications will be possible within the scope of the invention. With the apparatus according to the invention the benefit is also obtained that the produced carbon black will not be polluted by other elements than those which are present in the feed gas or by materials which it may be desirable to add and which can be added in the reactor.

In a favourable embodiment of the invention the hydrogen gas which is used as plasma gas can in addition be supplied with hydrocarbon gas, which can have a favourable effect in connection with the combustion or the consumption of the electrodes, which will thereby be less rapidly consumed. The control of the hydrogen supply to the plasma torch is provided by means of a control valve which is linked to the conditions in the plasma arc.

## Claims

1. An apparatus for the continuous production of carbon and hydrogen by the thermal decomposition of hydrocarbon gas, especially methane, characterized in that there as a thermal decomposition reactor is used a plasma torch (1) which in use is supplied with preheated hydrocarbon gas as a feed gas and with said preheated hydrocarbon gas and/or preheated hydrogen as a plasma gas, wherein at least a part of the hydrogen produced is recycled and used as a plasma gas and that in connection with the thermal decomposition reactor (1) there is provided a further reactor (2) with adjustable temperature zones in order to influence and control the properties of the carbon as well as to modify the surface and structure of the carbon, which reactor (2) has means for supplying gases and materials in the various temperature zones, that downstream of the reactor there is provided a cooler (3) for the reaction products and in which feed gas and plasma gas can be preheated and which is followed by separation means (4, 7) which may preferably consist of a cyclone (4) for separating coarse particles from the carbon component, that the cyclone (4) is connected to a filter device (7) wherein carbon of the desired particle size and structure is filtered out to a silo (8) and for further processing, and that the system is equipped with a pipe (9) for transfer of hydrogen partly to the chemical process industry, as an energy carrier, as well as back to the thermal decomposition reactor (4) via a return pipe (11).

2. An apparatus according to claim 1,
characterized in that the cooler (3) is a pipe cooler for preheating feed gas and plasma gas.

3. A method of operating the systems of claims 1 and 2,
characterized in that to the plasma torch (1) a combination of hydrogen and hydrocarbon gas as plasma gas is used, and that the quantity of hydrocarbon gas which is supplied to the plasma gas is controlled by the effect imparted to the plasma torch (1).

4. A method according to claim 3, characterized in that the plasma gas used consists exclusively of feed gas or decomposition gas from the filtering device (4, 7) and that the quantity of hydrogen which is returned as plasma gas is controlled by the effect imparted to the plasma torch (1), with a control valve linked to the plasma arc.

5. A method according to claim 4,
characterized in that the system is operated without the supply of any materials other than feed gas.

## Patentansprüche

1. Vorrichtung zur kontinuierlichen Herstellung von Kohlenstoff und Wasserstoff durch thermische Zerlegung von Kohlenwasserstoffgas, insbesondere Methan,
dadurch **gekennzeichnet**, daß als thermischer Zerlegungsreaktor ein Plasmabrenner (1) verwendet wird, der in Betrieb mit vorgewärmtem Kohlenwasserstoffgas als Speisegas und mit dem vorgewärmten Kohlenwasserstoffgas und/oder vorgewärmtem Wasserstoff als Plasmagas versorgt wird, wobei mindestens ein Teil des erzeugten Wasserstoffs recycliert und als ein Plasmagas verwendet wird, und daß in Verbindung mit dem thermischen Zerlegungsreaktor (1) ein weiterer Reaktor (2) vorgesehen ist mit einstellbaren Temperaturzonen zur Beeinflussung und Steuerung der Eigenschaften des Kohlenstoffs sowie zur Modifizierung der Oberfläche und Struktur des Kohlenstoffs, wobei der Reaktor (2) Mittel zur Zuführung von Gasen und Materialien in die verschiedenen Temperaturzonen aufweist, daß stromabwärts des Reaktors ein Kühler (3) für die Reaktionsprodukte vorgesehen ist, in dem Speisegas und Plasmagas vorgewärmt werden kann und an den sich eine Trenneinrichtung (4, 7), vorzugsweise in Form eines Zyklons (4), anschließt zum Abtrennen von groben Teilchen von der Kohlenstoffkomponente, daß der Zyklon (4) mit einer Filtereinrichtung (9) verbunden ist, in der Kohlenstoff von gewünschter Teilchengröße und Struktur in ein Silo (8) und für die weitere Bearbeitung ausgefiltert wird, und daß das System mit einer Leitung (9) versehen ist für die Überführung von Wasserstoff teils als Energieträger in den chemischen industriellen Prozeß sowie auch zurück in den thermischen Zerlegungsreaktor (4) über eine Rückführleitung (11).

2. Vorrichtung nach Anspruch 1,
dadurch **gekennzeichnet** , daß der Kühler (3) ein Röhrenkühler zum Vorwärmen von Speisegas und Plasmagas ist.

3. Verfahren zum Betreiben der Systeme nach Anspruch 1 und 2,
dadurch **gekennzeichnet** , daß für den Plasmabrenner (1) eine Kombination von Wasserstoff und Kohlenwasserstoffgas als Plasmagas verwendet wird, und daß die Menge des dem Plasmagas zugeführten Kohlenwasserstoffgases durch den dem Plasmabrenner (1) aufgezwungenen Effekt gesteuert wird.

4. Verfahren nach Anspruch 3,
dadurch **gekennzeichnet,** daß das brennende Plasmagas ausschließlich aus Speisegas oder Zerlegungsgas aus der Filtervorrichtung (4, 7) besteht, und daß die Menge des als Plasmagas zurückgeführten Wasserstoffs durch den dem Plasmabrenner (1) auferlegten Effekt gesteuert wird mittels eines mit dem Plasmabogen verknüpften Steuerventils.

5. Verfahren nach Anspruch 4,
dadurch **gekennzeichnet** , daß das System ohne jegliche Materialzufuhr außer der von Speisegas betrieben wird.

## Revendications

1. Appareil pour la production en continu de carbone et d'hydrogène par la décomposition thermique d'un gaz hydrocarboné, notamment le méthane, appareil caractérisé en ce qu'on utilise comme réacteur de décomposition thermique une torche (1) à plasma qui, en service, est alimentée par du gaz hydrocarboné préchauffé, à titre de gaz d'alimentation, et par ledit gaz hydrocarboné préchauffé et/ou par de l'hydrogène préchauffé comme gaz de plasma, au moins une partie de l'hydrogène produit étant recyclée et servant de gaz de plasma et en ce que, relié au réacteur (1) de décomposition thermique, il y a un autre réacteur (2) comportant des zones de température réglables afin d'influencer et de contrôler et maîtriser les propriétés du carbone ainsi que pour modifier la surface et la structure du carbone, ce réacteur (2) comportant un moyen pour fournir des gaz et des matières dans les diverses zones de température ; en ce que, en aval du réacteur, il y a un moyen réfrigérant (3) pour les produits de la réaction et en ce que du gaz d'alimentation et du gaz de plasma peuvent être préchauffés, ce qui est suivi d'un moyen séparateur (4, 7) pouvant de préférence consister en un cyclone (4) pour séparer des particules grossières du constituant carboné, en ce que le cyclone (4) est relié à un dispositif à filtre (7) dans lequel du carbone ayant la taille particulaire voulue et la structure voulue est séparé par filtration et dirigé vers un silo (8) et vers la suite de son traitement, et en ce que le système ou appareil est équipé d'un tube (9) pour transférer l'hydrogène partiellement vers l'industrie des procédés chimiques, à titre de véhicule énergétique,et aussipour faire revenir l'hydrogène vers le réacteur (4) de décomposition chimique, l'hydrogène empruntant un tube de retour (11).

2. Appareil selon la revendication 1, caractérisé en ce que le moyen réfrigérant (3) est un réfrigérant tubulaire pour préchauffer du gaz d'alimentation et du gaz de plasma.

3. Procédé pour faire fonctionner les systèmes et appareils des revendications 1 et 2, procédé caractérisé en ce qu'on utilise une combinaison d'hydrogène et d'un gaz hydrocarboné à titre de gaz de plasma que l'on envoie vers la torche (1) à plasma, et en ce que la quantité de gaz hydrocarboné qui est fournie au gaz pour plasma est réglée par l'effet conféré à la torche (1) pour plasma.

4. Procédé selon la revendication 3, caractérisé en ce que le gaz pour plasma que l'on utilise consiste exclusivement en du gaz d'alimentation ou en du gaz de décomposition provenant du dispositif filtrant (4, 7) et en ce que la quantité d'hydrogène, renvoyée comme gaz de plasma, est contrôlée et commandée par l'effet conféré à la torche (1) à plasma, avec une valve de commande reliée à l'arc du plasma.

5. Procédé selon la revendication 4, caractérisé en ce que le système ou appareil est mis en fonctionnement sans la fourniture de n'importe quelles autres matières autres que le gaz d'alimentation.
